# FASCICULE DE BREVET EUROPEEN

(11) **EP 3 949 709 B1**
(45) Date de publication et mention de la délivrance du brevet: **07.05.2025**
(21) Numéro de dépôt: 21189043.9
(22) Date de dépôt: 02.08.2021
(51) Int. Cl.: A01C 1/06

(54) **PROCÉDÉ D'OBTENTION DE GRAINS ENROBÉS DE SEMENCES D'ESPÈCES DIFFÉRENTES COUPLÉES**
VERFAHREN ZUR GEWINNUNG VON BESCHICHTETEN KÖRNERN VON SAMEN VERSCHIEDENER ARTEN, DIE MITEINANDER VERBUNDEN SIND
METHOD FOR OBTAINING COATED GRAINS OF COUPLED SEEDS OF DIFFERENT SPECIES

(30) Priorité: 07.08.2020 FR 2008353
(43) Date de publication de la demande: 09.02.2022
(73) Titulaire: Alpha Semences, 59553 Cuincy (FR)
(72) Inventeur: IOOS, Romain, 59553 Cuincy (FR)
(74) Mandataire: Cabinet Célanie

(56) Documents cités:
- WO-A1-2010/111309
- FR-A1- 3 021 184
- US-A1- 2012 084 888
- US-A1- 2012 220 454

## Description

### DOMAINE DE L'INVENTION

Le secteur technique de la présente invention est celui de l'enrobage de graines de semences préalablement couplées.

### ETAT DE LA TECHNIQUE

Les couverts végétaux interviennent en interculture de deux cultures et sont maintenant mieux perçus par les agriculteurs. Ils sont quelques fois indispensables pour remplacer les outils mécaniques. Le mélange d'espèces de graines permet de faire varier la nature des couverts. Cependant le frein principal à la qualité des semis réside dans la réussite du semis de diverses espèces. C'est pourquoi il est envisagé de combiner par enrobage et couplage de semences de nature différentes afin de diversifier les couverts.

Il est bien connu d'enrober des graines de semences à l'aide d'une ou plusieurs couches de matière identiques ou différentes en vue d'obtenir par exemple une protection contre les moisissures et interdire leur germination. On peut se reporter à titre d'illustration au brevet FR-3021184. On n'a pas pu jusqu'à ce jour enrober des graines de nature différente et surtout des graines ayant une grosseur ou une granulométrie différente.

Or, il existe un besoin de pouvoir semer en interculture des graines de nature différente dans l'intervalle de deux cultures successives afin de préparer le sol en l'améliorant. On sait procéder de manière empirique par un semis de deux espèces de semences en mélange. On comprend alors qu'il est impossible d'obtenir une pousse des deux espèces régulièrement réparties.

C'est pourquoi des études ont été réalisées afin de promouvoir l'enrobage dans un grain unique d'au moins deux espèces de semences couplées. Des exemples de tels grains couplés sont connus de US 2012/220454, US 2012/084888 et WO 2010/111309.

### EXPOSE DE L'INVENTION

Le but de la présente invention est de proposer un procédé d'enrobage et de couplage de semences de granulométrie différente amélioré afin de réaliser des grains couplés constitués par au moins deux semences.

L'invention a donc pour objet un procédé d'obtention de grains couplés selon la revendication 1.

Selon une caractéristique de l'invention, on applique sur les premiers et seconds grains enrobés une colle par pulvérisation avant agglomération.

Selon une autre caractéristique de l'invention, la première espèce de semence présente avant enrobage une granulométrie comprise entre 2 et 3 mm et la deuxième espèce présente avant enrobage une granulométrie comprise entre 0,9 et 2,5 mm.

Selon encore une autre caractéristique de l'invention, la granulométrie des grains couplés est comprise entre 2,5 et 4,5 mm.

Selon encore une autre caractéristique de l'invention, les grains couplés sont soumis à une étape de pelliculage, suivie d'une étape de séchage, de lissage et de lustrage et enfin d'une étape de triage à l'aide d'une table densimétrique.

Selon encore une autre caractéristique de l'invention, la gomme liquide est constituée de sucre blanc, de sirop de gomme arabique et d'empois d'amidon.

Avantageusement encore, la gomme liquide représente au moins 0,1% en masse de la semence.

L'invention concerne également les grains couplés obtenus selon le procédé.

Avantageusement, le grain couplé présente une granulométrie comprise entre 2,5 et 4,5 mm.

Un tout premier avantage de la présente invention réside dans le fait qu'il est maintenant possible d'ensemencer un champ de culture à la volée à l'aide de grains couplés pour obtenir un couvert végétal constitué de plusieurs espèces de plantes.

Un autre avantage de la présente invention réside dans le fait que le semis de grains couplés est réalisé de manière régulière sans prévoir un matériel spécial, tout en utilisant le matériel d'épandage classique.

D'autres caractéristiques, avantages et détails de l'invention seront mieux compris à la lecture du complément de description qui va suivre.

### DESCRIPTION DETAILLEE DE MODES DE REALISATION DE L'INVENTION

L'invention va être maintenant décrite avec d'avantage de détails. Comme indiqué précédemment, il est souhaitable d'intervenir entre deux cultures afin de réaliser un semis de graines de variétés végétales d'espèces différentes. Ces espèces sont choisies suivant le but recherché pour obtenir des plantes de tailles différentes occupant un encombrement différent, pour obtenir des plantes couvrantes, pour obtenir des pousses étalées dans le temps. Ainsi, les pousses les plus lentes profiteront des pousses plus rapides qui craquelleront en premier le sol d'enrobage. Le sol est également absorbant d'eau et donc gardera l'humidité autour des graines plus longtemps.

On peut également semer les grains enrobés avant la récolte de la culture en place car le semis hâté avant la moisson permet d'augmenter la probabilité de semer avant la pluie. Après la récolte, le sol se dessèche beaucoup et le semis de grains enrobés avant la moisson permet aussi de profiter de l'humidité résiduelle avant récolte.

La souplesse procurée par les grains enrobés et couplés selon l'invention permet un semis après la moisson sans détérioration de la qualité du semis.

Il va de soi que l'enrobage permet l'incorporation de substances amélioratrices pour la réussite du couvert végétal.

On a vu que les grains de chaque espèce de semences sont d'abord enrobés individuellement. Les semences sont de taille différente, de forme différente, et de rugosité de surface différente.

Chaque espèce est enrobée selon le même processus. La première semence peut être lisse et grosse ayant une granulométrie de 2 à 3 mm et la seconde semence peut être lisse, petite et ronde ayant une granulométrie de 0,9 à 2,5 mm. Il va de soi que si une troisième ou une quatrième semence est utilisée, chacune d'elles peut avoir une granulométrie du même ordre.

On procède d'abord à un enrobage à l'aide d'une gomme liquide composée de 8 à 15% en masse de sirop de sucre blanc, de 1 à 5% en masse de sirop de gomme arabique à 40% renfermant parfois de l'empois d'amidon.

Le pourcentage de gomme liquide varie en fonction de la semence utilisée et est généralement supérieur à 0,1% en masse par rapport à la semence. Bien entendu, la proportion de gomme utilisée varie en fonction de l'importance souhaitée pour l'épaisseur de la couche d'enrobage. Dans la littérature classique du domaine on propose des pourcentages d'enrobage représentant 100% et plus par rapport à la masse de la semence en cause.

Cette première étape est réalisée dans un malaxeur classique jusqu'à dissociation complète des grains séchés. On introduit par projection d'un produit collant sous forme de spray. Puis, on réalise un séchage par ventilation ou par infrarouge.

On procède à l'enrobage de la seconde semence de la même manière et le cas échéant des autres semences.

Il va de soi que d'autres semences peuvent être enrobées de la même manière afin que les grains couplés soient constitués de trois ou de quatre semences couplées, ou plus suivant les besoins de l'utilisateur.

Les grains enrobés de chaque semence sont éventuellement convoyés pour les introduire simultanément en pluie dans un malaxeur. On procède de manière identique quelle que soit le nombre de grains enrobés différents, comme par exemple trois, quatre ou plus de grains enrobés différents. Les grains sont couplés par un apport en spray de mélasse ou de colle et traités par un léger séchage pour assurer le couplage des semences différentes.

Les grains couplés obtenus sont éventuellement triés à l'aide d'une table densimétrique.

Les grains couplés sont ensuite soumis à une étape de pelliculage à l'aide d'une turbine de pelliculage avec apport successifs de mélasse par spray, d'argile par soufflerie et rotation. Divers adjuvants peuvent être introduits par exemple pour améliorer la rétention d'eau.

Après séchage, les grains sont soumis à une phase de lissage et de lustrage par application de talc et enfin d'une étape éventuelle de triage à l'aide d'une table densimétrique.

Les grains couplés ainsi obtenus présentent une granulométrie de l'ordre de 2,5 à 4,5 mm. Cette granulométrie est proposée car elle permet l'utilisation du matériel de dispersion classique. Mais, il va de soi si on envisage un épandage manuel la borne de 4,5 mm peut être dépassée.

Le procédé selon l'invention permet donc d'accéder à une meilleure répartition des espèces semées, de coupler des semences de granulométries différentes afin d'accroître la variété des semis de couverts.

## Revendications

1. Procédé d'obtention de grains couplés comprenant des semences d'espèces différentes, chacune étant de granulométrie différente, les dits grains couplés comprenant au moins deux semences, ledit procédé comprenant les étapes suivantes :
- on réalise un enrobage individuel de chacune des semences :
• on réalise un premier enrobage d'une première espèce de semence par projection d'une gomme liquide sur un lit de semences de cette première espèce,
• on réalise un séchage, par exemple par ventilation, pour obtenir des premiers grains enrobés de la première espèce de semence
• on réalise de la même manière au moins un second enrobage d'une seconde espèce de semence différente pour obtenir des seconds grains enrobés de la seconde semence,
- on réalise une agglomération des grains enrobés des au moins une première et seconde semences par couplage dans un malaxeur pour produire des grains couplés, comprenant des semences d'espèces différentes, et
- on procède à un triage des grains couplés à l'aide d'une table densimétrique.

2. Procédé d'obtention de grains couplés selon la revendication 1, **caractérisé en ce qu'**on applique sur les grains enrobés des au moins une première et seconde semences une colle par pulvérisation avant agglomération.

3. Procédé d'obtention de grains couplés selon la revendication 1 ou 2, **caractérisé en ce que** la première espèce de semence présente avant enrobage une granulométrie comprise entre 2 et 3 mm et la deuxième espèce présente avant enrobage une granulométrie comprise entre 0,9 et 2,5 mm.

4. Procédé d'obtention de grains couplés selon l'une des revendications précédentes, **caractérisé en ce que** la granulométrie des grains couplés est comprise entre 2,5 et 4,5 mm.

5. Procédé d'obtention de grains couplés selon l'une des revendications précédentes, **caractérisé en ce que** les grains couplés sont soumis à une étape de pelliculage, suivie d'une étape de séchage, de lissage et de lustrage et enfin d'une étape de triage à l'aide d'une table densimétrique.

6. Procédé d'obtention de grains couplés selon l'une quelconque des revendications précédentes **caractérisé en ce que** la gomme liquide est constituée de sucre blanc, de sirop de gomme arabique et d'empois d'amidon.

7. Procédé d'obtention de grains couplés selon la revendication 6, **caractérisé en ce que** la gomme liquide représente au moins 0,1% des grains couplés.

8. Grain couplé obtenu selon le procédé de l'une quelconque des revendications précédentes.

9. Grain couplé selon la revendication 8, **caractérisé en ce qu'**il présente une granulométrie comprise entre 2,5 et 4,5 mm.

## Patentansprüche

1. Verfahren zur Gewinnung von gekoppelten Körnern, das Samen verschiedener Arten umfasst, die jeweils eine unterschiedliche Korngröße haben, wobei die gekoppelten Körner mindestens zwei Samen umfasst, wobei das Verfahren die folgenden Schritte umfasst:
- Durchführen einer individuellen Ummantelung jedes der Samen:
• Durchführen einer ersten Ummantelung einer ersten Samenart durch Spritzen eines flüssigen Gummis auf ein Bett von Samen dieser ersten Art,
• Durchführen einer Trocknung, beispielsweise durch Belüftung, um erste ummantelte Körner der ersten Samenart zu erhalten
• Durchführen auf die gleiche Weise mindestens einer zweiten Ummantelung einer zweiten unterschiedlichen Samenart, um zweite ummantelte Körner des zweiten Samens zu erhalten,
- Durchführen einer Agglomeration der ummantelten Körner des mindestens einen ersten und zweiten Samens durch Kopplung in einem Mischer, um gekoppelte Körner zu erzeugen, die Samen verschiedener Arten umfassen, und
- Erfolgen einer Sortierung der gekoppelten Körner mithilfe eines Dichtemesstisches.

2. Verfahren zur Gewinnung von gekoppelten Körnern nach Anspruch 1, **dadurch gekennzeichnet, dass** auf die ummantelten Körner der mindestens einen ersten und zweiten Samen ein Klebstoff vor der Agglomeration durch Sprühen aufgetragen wird.

3. Verfahren zur Gewinnung von gekoppelten Körnern nach Anspruch 1 oder 2, **dadurch gekennzeichnet, dass** die erste Samenart vor der Ummantelung eine Korngröße zwischen 2 und 3 mm aufweist und die zweite Art vor der Ummantelung eine Korngröße zwischen 0,9 und 2,5 mm aufweist.

4. Verfahren zur Gewinnung von gekoppelten Körnern nach einem der vorhergehenden Ansprüche, **dadurch gekennzeichnet, dass** die Korngröße der gekoppelten Körner zwischen 2,5 und 4,5 mm liegt.

5. Verfahren zur Gewinnung von gekoppelten Körnern nach einem der vorhergehenden Ansprüche, **dadurch gekennzeichnet, dass** die gekoppelten Körner einem Beschichtungsschritt unterzogen werden, gefolgt von einem Trocknungs-, Glättungs- und Polierschritt und zuletzt einem Sortierschritt mithilfe eines Dichtemesstisches.

6. Verfahren zur Gewinnung von gekoppelten Körnern nach einem der vorhergehenden Ansprüche, **dadurch gekennzeichnet, dass** der flüssige Gummi aus weißem Zucker, Gummi-Arabikum-Sirup und Stärkekleister besteht.

7. Verfahren zur Gewinnung von gekoppelten Körnern nach Anspruch 6, **dadurch gekennzeichnet, dass** der flüssige Gummi mindestens 0,1 % der gekoppelten Körner ausmacht.

8. Gekoppeltes Korn, das nach dem Verfahren eines der vorhergehenden Ansprüche gewonnen wurde.

9. Gekoppeltes Korn nach Anspruch 8, **dadurch gekennzeichnet, dass** es eine Korngröße zwischen 2,5 und 4,5 mm aufweist.

## Claims

1. Method for obtaining coupled grains comprising seeds of different species, each of different grain size, said coupled grains comprising at least two seeds, said method comprising the following steps:
- individual coating of each of the seeds is performed:
• a first coating of a first seed species is carried out by spraying a liquid gum on a seed bed of this first species,
• drying, for example by ventilation, is carried out to obtain first coated grains of the first seed species,
• at least one second coating of a second different seed species is carried out in the same manner to obtain second coated grains of the second seed,
- an agglomeration of the coated grains of the at least one first and second seeds is implemented by coupling in a mixer to produce coupled grains, comprising seeds of different species, and
- the coupled grains are sorted using a densimetric table.

2. Method for obtaining coupled grains according to claim 1, **characterised in that** a glue is applied to the coated grains of the at least one first and second seeds by spraying before agglomeration.

3. Method for obtaining coupled grains according to claim 1 or 2, **characterised in that** the first seed species has a grain size of between 2 and 3 mm before coating and the second species has a grain size of between 0.9 and 2.5 mm before coating.

4. Method for obtaining coupled grains according to one of the preceding claims, **characterised in that** the grain size of the coupled grains is between 2.5 and 4.5 mm.

5. Method for obtaining coupled grains according to one of the preceding claims, **characterised in that** the coupled grains are subjected to a film-coating step, followed by a drying, smoothing and polishing step and finally a sorting step using a densimetric table.

6. Method for obtaining coupled grains according to any one of the preceding claims, **characterised in that** the liquid gum is composed of white sugar, gum arabic syrup and starch paste.

7. Method for obtaining coupled grains according to claim 6, **characterised in that** the liquid gum represents at least 0.1% of the coupled grains.

8. Coupled grain obtained according to the method of any one of the preceding claims.

9. The coupled grain according to claim 8, **characterised in that** it has a grain size between 2.5 and 4.5 mm.
